# EUROPÄISCHE PATENTSCHRIFT

(11) **EP 3 349 627 B1**
(45) Veröffentlichungstag und Bekanntmachung des Hinweises auf die Patenterteilung: **03.07.2019**
(21) Anmeldenummer: 16766938.1
(22) Anmeldetag: 15.09.2016
(51) Int. Cl.: A47J 31/60

(54) **REINIGUNGSSYSTEM FÜR EINE VORRICHTUNG ZUR AUSGABE VON FLÜSSIGEN LEBENSMITTELN**
CLEANING SYSTEM FOR AN APPARATUS FOR DISPENSING LIQUID FOODSTUFFS
SYSTÈME DE NETTOYAGE POUR UN DISPOSITIF DESTINÉ À DISTRIBUER DES PRODUITS ALIMENTAIRES LIQUIDES

(30) Priorität: 18.09.2015 DE 102015217964
(43) Veröffentlichungstag der Anmeldung: 25.07.2018
(73) Patentinhaber: FRANKE Kaffeemaschinen AG, 4663 Aarburg (CH)
(72) Erfinder: VETTERLI, Heinz, 8855 Wangen (CH); TURI, Mariano, 8046 Zürich (CH)
(74) Vertreter: Lemcke, Brommer & Partner Patentanwälte Partnerschaft mbB
(86) Internationale Anmeldenummer: PCT/EP2016/071798
(87) Internationale Veröffentlichungsnummer: WO 2017/046230

(56) Entgegenhaltungen:
- EP-A1- 2 272 408
- EP-A1- 2 474 254
- EP-A1- 2 702 908
- EP-A1- 2 807 964

## Beschreibung

Die vorliegende Erfindung betrifft eine Vorrichtung zur Ausgabe von flüssigen Lebensmitteln, insbesondere Milchprodukten, mit einem integrierten Reinigungssystem, welches einen Reinigungsbehälter für eine Spüllösung umfasst, der zur Durchführung eines Reinigungsvorganges mit einer Lebensmittelzuleitung der Vorrichtung verbindbar ist.

Bei der Ausgabe flüssiger Lebensmittel, beispielsweise in Form von Heiß- oder Kaltgetränken, erfolgt in dem Ausgabegerät häufig eine Verarbeitung der flüssigen Lebensmittel, beispielsweise durch Erhitzung, Kühlung, Mischung unterschiedlicher Lebensmittelbestandteile, Aufschäumen oder ähnlichem. Die Bauteile und Leitungssysteme im Inneren der Getränkeausgabevorrichtung, die mit dem flüssigen Lebensmittel in Kontakt kommen, müssen hierbei aus hygienischen Gründen in regelmäßigen Zeitabständen gereinigt werden. Dies erfolgt in der Regel durch ein Reinigungssystem, welches die betroffenen Bauteile und Leitungssysteme mit einer Spüllösung spült. Je nach Art des Lebensmittels müssen hierbei spezielle Reinigungsmittel verwendet werden, mit denen die Lebensmittelrückstände beseitigt werden können.

Das Reinigungsmittel liegt aus praktischen Gründen häufig als Konzentrat vor, aus dem in dem Spülsystem zusammen mit Wasser die Spüllösung gemischt wird. Das Reinigungssystem kann hierzu insbesondere eine Reinigungsmittelpumpe umfassen, welche dazu vorgesehen ist, das Reinigungsmittel aus einem Reinigungsmittelbehälter in eine Mischkammer bzw. einen Reinigungsbehälter zu fördern, in der bzw. dem die Spüllösung gemischt wird. In der DE 10 2008 903 733 ist ein Reinigungsmodul für Maschinen zur Herstellung flüssiger Lebensmittel, insbesondere für Kaffeemaschinen, beschrieben. Das Reinigungsmodul umfasst mindestens einen Reinigungsmittelbehälter, eine Dosierpumpe zur Förderung des Reinigungsmittels und einen Mischbehälter zum Mischen einer Spüllösung aus zugeführtem Wasser und Reinigungsmittel. Das Reinigungsmodul wird zur Durchführung eines Reinigungsvorganges anstelle eines Lebensmittelbehälters mit der Kaffeemaschine verbunden.

Aus der nicht vorveröffentlichten DE 10 2014 215 689 ist eine Getränkeausgabevorrichtung mit einem Reinigungssystem bekannt, bei der ein Reinigungsmittelbehälter und eine zugehörige Reinigungsmittelpumpe in die Getränkeausgabevorrichtung integriert sind. Wird ein Lebensmittelbehälter durch einen Reinigungsmittelmischbehälter ersetzt, so erkennt die Getränkeausgabevorrichtung dies automatisch und ein Reinigungsvorgang kann gestartet werden.

Aus der EP 2 272 409 A1 und der EP 2 272 408 A1 ist eine Aufschäumvorrichtung bekannt, bei der Milch über eine Venturi-Düse angesaugt und mit Dampf aufgeschäumt wird. Zur Reinigung der Aufschäumkammer kann über ein Umschaltventil die Milchleitung mit einer Heißwasser- bzw. Dampf-Leitung verbunden werden, um Heißwasser durch die Aufschäumkammer zu spülen.

Aus der DE 10 2013 105 402 (A1) bzw. der inhaltsgleichen EP 2 807 964 A1 ist eine Vorrichtung zum Erzeugen von Milchschaum bekannt, welche ebenfalls eine Aufschäumkammer mit Venturi-Düse aufweist. Zum Spülen kann der Milchansaugschlauch abgenommen und mittels eines schwenkbaren Adapters die Ansaugleitung mit einer parallel verlaufenden Spülleitung verbunden werden. Über die Spülleitung kann dem Milchsystem zur Reinigung Heißwasser oder Dampf unter externem Druck zugeführt werden.

Die EP 2 702 908 A1 beschreibt eine Kaffeemaschine mit einem an das Trinkwassernetz anschließbaren Wassertank, dessen Füllstand über einen Füllstandsensor überwacht wird. Für einen Reinigungs- bzw. Entkalkungsvorgang wird eine Reinigungs- bzw. Entkalkungsflüssigkeit in den Wassertank eingefüllt. Bei Abschluss des Reinigungs- bzw. Entkalkungsvorgangs überwacht der Füllstandsensor auch, dass der der Wassertank vor einem erneuten Befüllen vollständig geleert wird, um Geschmacksbeeinträchtigungen für einen nachfolgenden Getränkebezug zu minimieren.

Die EP 2 474 254 A1 beschreibt eine als Beistellgerät ausgebildete Vorrichtung zur Erzeugung von Milchschaum mittels Dampf. Zur Durchführung eines Reinigungsvorganges, bei dem eine Reinigungsflüssigkeit durch das Milchsystem zirkuliert, kann der Getränkeauslauf in eine Wartungsstellung verschwenkt werden, in welcher aus dem Auslauf austretende Reinigungsflüssigkeit aufgefangen und somit eine versehentliche Ausgabe in ein Getränkebehältnis unterbunden wird.

Da die Reinigung zumindest täglich, teilweise auch mehrmals täglich durchgeführt werden muss, ist eine einfache Handhabung des Reinigungssystems bzw. Durchführung des Reinigungsvorganges wichtig. Andererseits muss bei der Handhabung des Reinigungssystems sichergestellt werden, dass ein Kontakt bzw. eine Vermengung des flüssigen Lebensmittels und einer zur Reinigung verwendeten Spüllösung ausgeschlossen wird.

Eine Aufgabe der Erfindung besteht daher darin, ein Reinigungssystem anzugeben, welches einfach und sicher zu handhaben ist. Insbesondere soll das Reinigungssystem integriert sein, also keine separat zu handhabenden bzw. zu lagernden Teile wie externe Reinigungsmodule oder Reinigungsmittelmischbehälter aufweisen.

Die Aufgabe wird gelöst durch eine Vorrichtung mit den Merkmalen des Anspruchs 1. Vorteilhafte Ausgestaltungen sind den abhängigen Ansprüchen zu entnehmen.

Bei einer Vorrichtung der eingangs genannten Art wird die Aufgabe erfindungsgemäß dadurch gelöst, dass die Lebensmittelzuleitung mit einem Anschluss versehen ist, der zum Aufstecken einer zu einem Vorratsbehälter mit dem flüssigen Lebensmittel führenden Ansaugleitung dient, dass die Vorrichtung mindestens eine Pumpe für das flüssige Lebensmittel umfasst, um das flüssige Lebensmittel über die Lebensmittelzuleitung aus dem Vorratsbehälter zu fördern, dass ein Verbindungselement vorgesehen ist, welches bei abgenommener Ansaugleitung auf den Anschluss aufsteckbar ist, um die Lebensmittelzuleitung mit dem integrierten Reinigungssystem fluidisch zu verbinden und dass die Vorrichtung ausgebildet ist, zur Reinigung mittels der Pumpe Spüllösung aus dem Reinigungsbehälter zu fördern.

Zur Durchführung eines Reinigungsvorganges muss somit lediglich der zu dem Vorratsbehälter mit dem flüssigen Lebensmittel führende Ansaugschlauch von dem Anschluss abgezogen und das Verbindungselement auf den Anschluss aufgesteckt werden. Auf diese Weise kann dann Spüllösung aus dem Reinigungsbehälter in die Lebensmittelzuleitung zugeführt werden, um diese zu spülen. Dies geschieht durch dieselbe Pumpe, mit der auch im Betrieb das flüssige Lebensmittel gefördert wird, also im Falle eines Milchsystems mittels der Milchpumpe. Auf diese Weise wird einerseits auch die Pumpe mit der Spüllösung durchgespült und somit gereinigt. Anderseits muss das Reinigungssystem, da die Spüllösung nicht unter externem Druck zugeführt wird, nicht mit einem separaten Druckerzeuger oder ähnlichem ausgestattet sein. Darüber hinaus lässt sich die Steckverbindung mit dem Verbindungselement wesentlich einfacher und betriebssicherer gestalten, da dieses nicht unter Druck dicht sein muss, sondern lediglich eine Ansaugung der Spüllösung gewährleisten muss.

Der abgenommene Ansaugschlauch wird auf herkömmliche Weise, beispielsweise durch Einlegen in ein Reinigungsbad gereinigt. Das Reinigungssystem selbst ist fest in der Vorrichtung integriert, so dass der Reinigungsvorgang selbst effizient und schnell durchgeführt werden kann. Der Reinigungsvorgang wird nach Aufstecken des Verbindungselements vorzugsweise automatisiert durch eine entsprechend ausgebildete Steuerungseinrichtung der Vorrichtung ausgeführt. Da zur Reinigung lediglich der Ansaugschlauch und das Verbindungselement umgesteckt werden müssen, kann sicher gewährleistet werden, dass das flüssige Lebensmittel nicht mit der Spüllösung in Kontakt kommt.

Das integrierte Reinigungssystem der vorliegenden Erfindung kann insbesondere einen Aufnahmeraum für einen Reinigungsmittelbehälter sowie eine Dosierpumpe zur dosierten Förderung von Reinigungsmittel aus dem Reinigungsmittelbehälter in den Reinigungsbehälter aufweisen. In dem Reinigungsbehälter wird aus Reinigungsmittel und Wasser, vorzugsweise Warmwasser, die Spüllösung gemischt. Das Reinigungsmittel liegt somit als Konzentrat vor, so dass der im Reinigungsmittelbehälter vorhandene Vorrat für eine Vielzahl von Reinigungsvorgängen ausreicht. Der Reinigungsmittelbehälter verbleibt somit in seinem separaten Aufnahmeraum und braucht lediglich nach vollständigem Verbrauch des Reinigungsmittels erneuert oder aufgefüllt zu werden.

Zweckmäßiger Weise wird der Anschluss als Stecknippel und die Ansaugleitung als Ansaugschlauch mit einer auf dem Stecknippel aufsteckbaren Schlauchkupplung ausgebildet. Somit ist eine einfache und sichere Handhabung gewährleistet.

Bei einer vorteilhaften Weiterbildung ist dem Anschluss ein Sensor zugeordnet, der einen aufgesteckten Zustand des Verbindungselements erkennt und ein Steuersignal an eine Steuerungseinrichtung der Vorrichtung sendet, aufgrund dessen der Reinigungsvorgang aktivierbar ist oder selbsttätig aktiviert wird. Auf diese Weise wird sichergestellt, dass ein Reinigungsvorgang nur bei ordnungsgemäß aufgestecktem Verbindungselement durchgeführt werden kann. Ist dagegen die zu dem Vorratsbehälter führende Ansaugleitung auf den Anschluss aufgesteckt, so unterbindet die Steuerungseinrichtung die Durchführung eines Reinigungsvorgangs. Umgekehrt kann eine Ausgabe von flüssigem Lebensmittel unterbunden werden, wenn der Sensor einen aufgesteckten Zustand des Verbindungselements erkennt. Auf diese Weise ist sichergestellt, dass nicht versehentlich Spüllösung ausgegeben und irrtümlich für Lebensmittel gehalten wird. Zusätzlich oder alternativ kann auch eine sensorgestützte Erkennung eines Aufgesteckten Zustandes des Ansaugschlauchs vorgesehen sein.

Der Sensor ist bei einer bevorzugten Ausführungsform als Reedkontakt ausgebildet, und an dem Verbindungselement ist ein Magnet zur Auslösung des Reedkontaktes angeordnet. Ein solcher Sensor ermöglicht auf einfacher Weise eine sichere Erkennung, ob auf den Anschluss das Verbindungselement oder die Ansaugleitung aufgesteckt ist.

Bei einer besonders bevorzugten Ausführungsform der Erfindung ist das Verbindungselement mit der Vorrichtung beweglich verbunden und bei abgenommener Ansaugleitung von einer inaktiven Stellung in eine Reinigungsstellung bewegbar, in der es die Lebensmittelzuleitung mit dem integrierten Reinigungssystem verbindet. Da das Verbindungselement an der Vorrichtung selbst vorgesehen und angebracht ist, muss es nicht als separates Bauteil gehandhabt und aufbewahrt werden, so dass es zur Durchführung eines Reinigungsvorganges schnell und einfach zum Einsatz gebracht werden kann.

Beispielsweise kann das Verbindungselement an einer Konsole der Vorrichtung angeordnet sein, gegenüber der es um eine Achse drehbar und um einen vorgegebenen Hubweg in axialer Richtung verschiebbar gelagert ist. Zur Durchführung eines Reinigungsvorganges wird das Verbindungselement von der inaktiven Stellung in die Reinigungsstellung zu bewegen, in der es auf den als Stecknippel ausgeführten Anschluss aufsteckbar ist.

Das Verbindungselement kann insbesondere als starres Verbindungsteil ausgeführt sein, welches in Form einer Steckbrücke auf den als Stecknippel ausgeführten Anschluss und einen weiteren, zu dem Reinigungsbehälter führenden Stecknippel aufsteckbar ist. Eine solche Steckbrücke ist einfach zu handhaben und sicher zu bedienen. Werden für Reinigungssystem und Lebensmittelzuleitung Stecknippel unterschiedlicher Bauform und/oder Größe verwendet, so kann hieraus geschlossen werden, dass die Ansaugleitung versehentlich auf den weiteren zu dem Reinigungsbehälter führenden Stecknippel aufgesteckt wird.

Ein solches starres Verbindungsteil in Form einer Steckbrücke kann insbesondere an einem Bedienhebel angeordnet werden, der gegenüber einer Konsole um eine Achse drehbar und um einen vorgegebenen Hubweg in axialer Richtung verschiebbar gelagert ist. Mittels des Bedienhebels kann das Verbindungsteil von einer inaktiven Stellung in eine Reinigungsstellung bewegt werden, in der es die beiden ebenfalls an der Konsole angebrachten Stecknippel verbindet. Der Bedienhebel kann gleichzeitig als elektrischer Schalter oder Kontakt dienen, so dass über die Schalterstellung die Position des Verbindungsteils erkannt wird und automatisch von einem Reinigungsmodus in einen Lebensmittelausgabemodus oder umgekehrt geschaltet oder eine Aktivierung des Reinigungsmodus zumindest freigegeben werden kann.

Insbesondere kann an der Konsole mindestens ein Blindnippel angeordnet sein, auf den das Verbindungsteil in einer inaktiven Stellung aufsteckbar ist. Somit befindet sich das Verbindungsteil auch in der inaktiven Stellung in einer definierten Position und wird sicher gehalten.

Weitere bevorzugte Merkmale und Ausführungsformen werden im Folgenden anhand von Ausführungsbeispielen und die Figuren erläutert. Dabei zeigt:
- Fig. 1: zwei Kaffeevollautomaten mit einer gemeinsamen Zuführeinheit für Milchprodukte,
- Fig. 2: eine Draufsicht auf die Kaffeevollautomaten und die Zuführeinheit aus Figur 1 mit schematisch gezeigten Milchleitungen,
- Fig. 3: ein in der Zuführeinheit integriertes Reinigungssystem mit Dosierpumpe, Reinigungsbehälter und Bedienkonsole,
- Fig. 4: die Bedienkonsole aus Figur 3 mit aufgesteckten Milchansaugleitungen,
- Fig. 5: die Bedienkonsole aus Figur 4 mit einem in einer Reinigungsstellung befindlichen Reinigungsadapter und
- Figur 6: ein alternatives Ausführungsbeispiel für einen schwenkbar an einer Bedienkonsole angeordneten Reinigungsadapter.

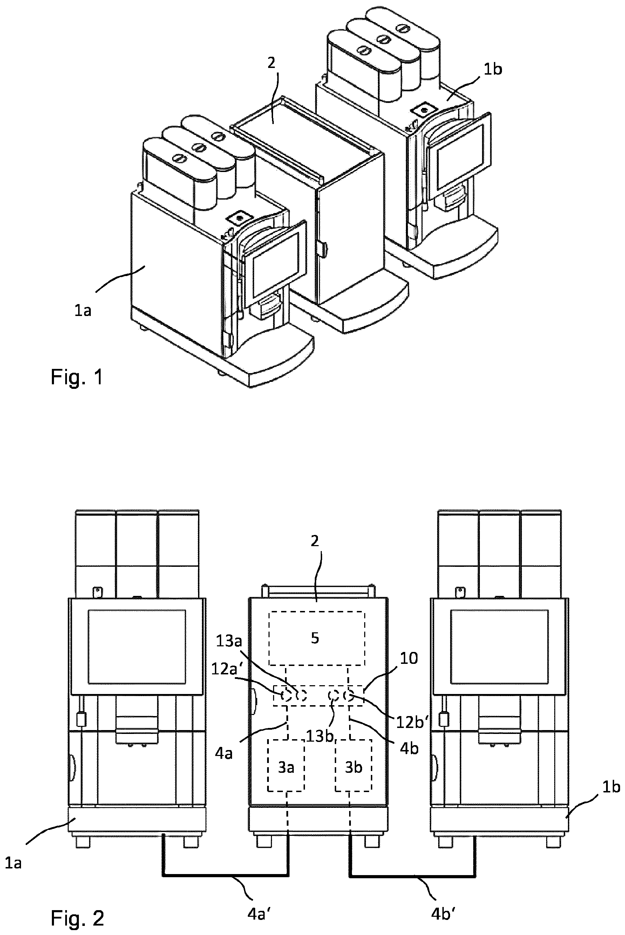

In Fig. 1 sind beispielhaft zwei Kaffeevollautomaten 1a, 1b sowie eine dazwischen aufgestellte dritte Einheit 2 in Form eines Beistellgerätes gezeigt. Bei dem Beistellgerät 2 handelt es sich um eine Kühleinheit, die zum Aufbewahren von gekühlter Milch für die Zubereitung von Kaffee- oder Milchgetränken mit warmer oder kalter Milch oder Milchschaum dient. Hierzu enthält die Kühleinheit 2 eine entsprechende Ausgabevorrichtung für Milchprodukte. Die Installation des Beistellgerätes erfolgt mittig zwischen zwei Kaffeemaschinen. Alternativ kann die Kühleinheit natürlich auch als Unterthekengerät ausgebildet sein.

Ebenso ist es möglich, die Kühleinheit und zugehörige Ausgabevorrichtung für Milchprodukte in einen Kaffeevollautomat zu integrieren.

Die Kühleinheit 2 ist elektronisch gesteuert und arbeitet mit der Steuerung der beiden Kaffeevollautomaten 1a, 1b zusammen. Beispielsweise erfolgt eine Temperaturanzeige und Einstellung in der Kühleinheit über das Display der Kaffeevollautomaten, 1a, 1b. Ebenso können die Leermeldung, Produktsperrung bei Milchmangel und ein Restmengenbezug von Milch-/Milchkaffeeprodukten nach der Leermeldung an den angeschlossenen Kaffeemaschinen 1a, 1b programmiert werden.

Das Beistellgerät 2 verfügt über ein integriertes Reinigungssystem, mit dem automatische Spül- und Reinigungsprogramme von Beistellgerät 2 und Kaffeemaschinen 1a, 1b ausgeführt werden können. Hierzu werden die internen und externen Milchleitungen der Kaffeemaschinen 1a, 1b sowie des Beistellgeräts 2 zur Entfernung von Milchrückständen mit einer Spüllösung gespült.

In Figur 2 ist eine Ansicht der Kaffeevollautomaten 1a, 1a und des Beistellgeräts mit einem schematischen Blockdiagramm der in dem Beistellgerät 2 enthaltenen Ausgabevorrichtung für Milch gezeigt. Das Beistellgerät 2 enthält zwei Hochleistungsmilchpumpen 3a, 3b; mit denen Milch aus einen Milchbehälter 5 über entsprechende Milchleitungen 4a, 4b, 4a', 4b' zu den beiden Kaffeevollautomaten 1a, 1b gefördert werden kann. An einer Anschlusskonsole 10 wird jeweils ein zu dem Milchbehälter führender Ansaugschlauch 12a, 12b mit der Milchleitung 4a, 4b verbunden. Hierzu sind entsprechende Stecknippel 12a', 12b' zum Aufstecken der Ansaugschläuche 12a, 12b vorgesehen. Die die Milchleitungen 4a, 4b führen von der Anschlusskonsole 10 zu den beiden Milchpumpen 3a, 3b und von dort als externe Leitungen 4a', 4b' weiter zu den beiden Kaffeevollautomaten 1a, 1b.

Neben den zu den Milchleitungen 4a, 4b führenden Stecknippeln 12a',12b' ist jeweils ein zweiter Stecknippel 13a, 13b angeordnet, der zu dem nachfolgend näher beschriebenen integrierten Reinigungssystem führt. Über einen zugehörigen Reinigungsadapter können die jeweils nebeneinander angeordneten Stecknippel 12a', 13a und 12b', 13b bei abgenommenem Ansaugschlauch 12a, 12b verbunden und damit das Reinigungssystem mit der jeweiligen Milchzuleitung 4a, 4b verbunden werden.

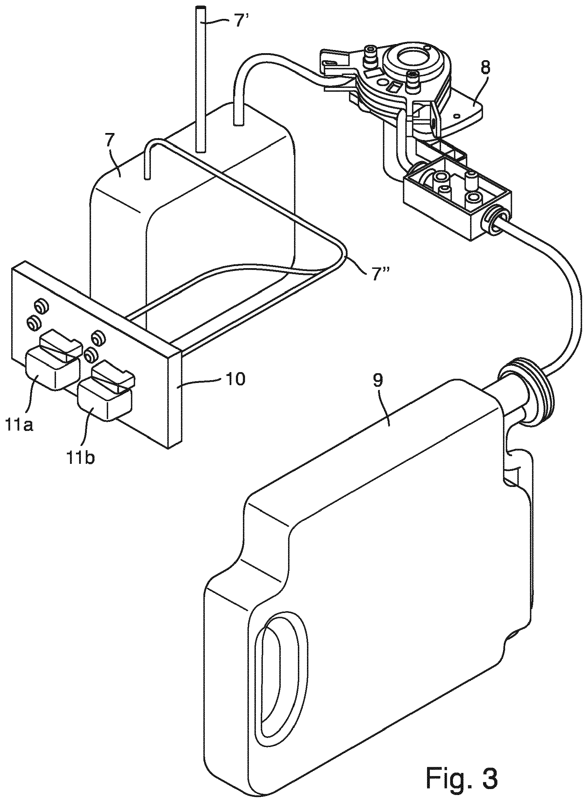

Die Komponenten des in das Beistellgerät 2 integrierten Reinigungssystems sind in Fig. 3 schematisch gezeigt. Das Reinigungssystem umfasst einen Reinigungsbehälter 7, eine Reinigungsmittelpumpe 8 sowie einen Reinigungsmittelbehälter 9. Die Reinigungsmittelpumpe 8 fördert dosiert Reinigungsmittel aus dem Reinigungsmittelbehälter 9 in den Reinigungsbehälter 7. Dort wird aus dem Reinigungsmittel durch Zugabe von Wasser über eine entsprechende Wasserzuleitung 7' eine Spüllösung gemischt. Von dem Reinigungsbehälter 7 führt eine sich verzweigende Leitung 7" zu einer Anschlusskonsole 10, an der das integrierte Reinigungssystem mit den Milchpumpen 3a, 3b verbunden werden kann. Die Verbindung erfolgt manuell mit Hilfe von Verbindungselementen 11 in Form starrer Adapter bzw. Steckbrücken, die auf entsprechende Schlauchanschlüsse aufgesteckt werden und diese verbinden, welche einerseits zu der betreffenden Milchpumpe 3a, 3b, andererseits zu dem Reinigungsbehälter 7 führen.

Der Reinigungsmittelbehälter 9 ist als Einwegartikel ausgeführt und ab Werk mit einem Reinigungsmittel befüllt. Im Ausführungsbeispiel ist das Reinigungsmittel ein Milchreiniger und dient zum Reinigen des Milchschaumsystems M1, M2 von anhaftenden Milchrückständen, insbesondere Eiweißen. Zur Durchführung eines Reinigungsvorgangs werden das integrierte Milchschaumsystem des Kaffeevollautomaten 1a, 1b, insbesondere die Milchpumpe 3a, 3b, die Milchleitungen sowie gegebenenfalls vorhandene Durchlauferhitzer und Aufschäumkammer bis hin zum Auslass für Milch bzw. Milchschaum, mit der Spüllösung gespült. Anschließend wird mit Klarwasser und/oder Heißdampf nachgespült.

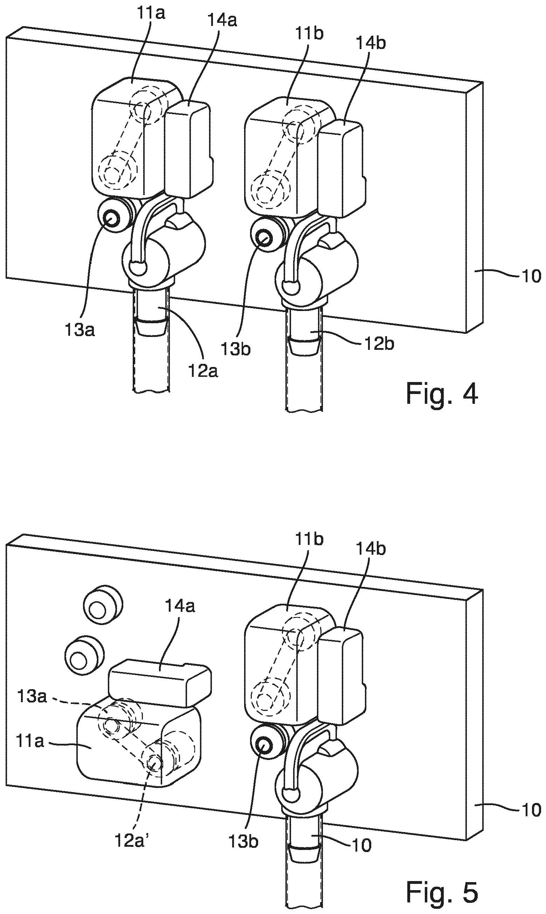

In Fig. 4 ist die Anschlusskonsole 10 vergrößert gezeigt. Von vorne sind zwei Ansaugschläuche 12a, 12b mittels Schlauchkupplungen auf entsprechende Stecknippel 12a', 12b' aufgesteckt, die über jeweils eine Milchleitung (4a, 4b in Figur 2) zu den beiden Milchpumpen 3a, 3b führen. Die als Steckadapter ausgebildeten Verbindungselemente 11a, 11b befinden sich in einer inaktiven Stellung und sind zur Aufbewahrung auf jeweils zwei Blindnippel 16a, 17a, 16b, 17b aufgesteckt. Die Ansaugleitungen 12a, 12b führen zu dem Milchbehälter 5 und können abgenommen werden, um diese separat zu reinigen. In der in Fig. 4 gezeigten Position mit aufgesteckten Ansaugleitungen 12a, 12b kann über die Milchpumpen 3a, 3b Milch aus dem Milchbehälter 5 angesaugt werden.

Neben den Stecknippeln 12a', 12b' mit den aufgesteckten Anschlussleitungen 12a, 12b befindet sich jeweils ein zweiter Stecknippel 13a, 13b der über die Leitung 7" zu dem Reinigungsbehälter 7 führt. Wird einer der Ansaugschläuche 12a abgenommen, so kann der betreffende Adapter 11a aus seiner inaktiven Stellung von der Blindnippeln 16a, 17a abgezogen und in der Art einer Brücke über die beiden Stecknippel 13a, 12a' gesteckt werden, um so das Reinigungssystem über die betreffende Milchleitung 4a mit der jeweiligen Milchpumpe 3a, 3b zu verbinden. Für das linke Milchsystem M1 ist diese Stellung in Fig. 5 gezeigt.

Die beiden Reinigungsadapter 11a, 11b sind jeweils starr an einem knebelförmigen Bedienhebel 14a, 14b angeordnet und mit diesem verbunden. Die Bedienhebel 14 a, 14b können zusammen mit ihrem zugehörigen Reinigungsadapter 11a, 11b um etwa die Länge der Stecknippel 13a, 12a', 13b, 12b', bzw. Blindnippel 16a, 17a, 16b, 17b senkrecht zur Anschlusskonsole 10 herausgezogen werden und anschließend um eine Schwenkachse soweit verschwenkt werden, bis die Reinigungsadapter 11a, 11b über den beiden zugehörigen Stecknippeln 13a, 12a', 13b, 12b' positioniert sind und auf diese aufgesteckt werden können. Die Bedienhebel 14a, 14b betätigen hierbei zusätzlich einen hinter der Anschlusskonsole 10 befindlichen elektrischen Schalter bzw. Kontakt, der ein Signal an die Steuerungseinrichtung des Beistellgerätes 2 oder der Kaffeevollautomaten 1a, 1b abgibt, so dass die Steuerungseinrichtung die Position der Reinigungsadapter 11a, 11b kennt. Alternativ können auch Sensoren, wie etwa Reedsensoren hinter der Anschlusskonsole 10 angeordnet sein, mit denen die Position der Reinigungsadapter 11a, 11b erkannt werden kann.

Ist der Reinigungsadapter 11a wie in Figur 5 gezeigt auf die benachbarten Schlauchanschlüsse 12a', 13a aufgesteckt, so wird dieser Zustand wie beschrieben an die Steuerungseinrichtung signalisiert, die daraufhin entweder einen Reinigungsmodus umschaltet, in welchen entweder ein Reinigungsvorgang per Menüsteuerung gestartet werden kann, oder in welchem alternativ der Reinigungsvorgang selbsttätig gestartet wird. Dabei wird zur Reinigung des betreffenden Milchsystems einschließlich aller in Beistelleinheit 2 und zugehörigem Kaffeevollautomat 1a enthaltenen, mit Milch in Kontakt kommenden Bauteile über die Milchpumpe 3a Spüllösung aus dem integrierten Reinigungsbehälter 7 gefördert und das Milchsystem so gereinigt. Nach Beendigung des Spülvorgangs wird nochmals mit Frischwasser nachgespült. Anschließend kann der Reinigungsadapter 11a wieder abgezogen und zurück in die in Figur 4 gezeigte inaktive Stellung verschwenkt werden und der zum Milchbehälter 5 führende Ansaugschlauch 12a auf den Stecknippel 12a' ausgesteckt werden. Das Milchsystem M1 ist nun wieder bereit zur Ausgabe von Milchprodukten.

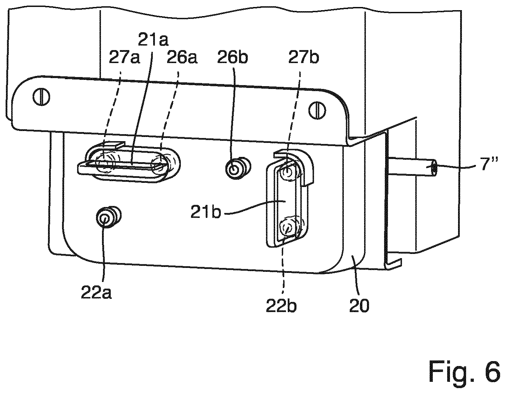

Figur 6 zeigt ein alternatives Ausführungsbeispiel für einen Reinigungsadapter. Wie im vorangegangenen Ausführungsbeispiel sind Anschlüsse 22a, 22b für zwei Milchsysteme vorgesehen. Auf diese wird im betriebsbereiten Zustand jeweils ein Ansaugschlauch, der mit einem Vorratsbehälter für Milch (nicht gezeigt) aufgesteckt. Zwei Reinigungsadapter 21a, 21b dienen dazu, den jeweiligen Anschluss 22a, 22b mit dem integrierten Reinigungssystem zu verbinden. Die Reinigungsadapter sind zu diesem Zweck jeweils um eine Achse 27, 27b schwenkbar, sowie in axialer Richtung herausziehbar. Im betriebsbereiten Zustand, also in einer hinsichtlich des Reinigungssystems inaktiven Stellung, sind die Reinigungsadapter 21a, 21b auf jeweilige Blindnippel 26a, 26b aufgesteckt. Um sie in eine Reinigungsstellung zu bewegen, in der sie das integrierte Reinigungssystem mit dem Milchsystem des Kaffeevollautomaten verbinden, werden die Reinigungsadapter 21a, 21b ein Stück weit herausgezogen, dann um 90° bis über den jeweils zugehörigen Anschlussnippel 22a, 22b verschwenkt, und zwar der linke Reinigungsadapter 21a im Uhrzeigersinn, und der rechte Reinigungsadapter 21b gegen den Uhrzeigersinn, und anschließend durch Einschieben des Adapters 22a, 22b in Richtung der Bedienkonsole 20 auf den zugehörigen Anschlussnippel 22a 22b aufgesteckt.

In Figur 6 ist der linke Reinigungsadapter 21a in der inaktiven Stellung, also im hinsichtlich des Milchsystems betriebsbereiten Zustand, und der rechte Reinigungsadapter 21b in der Reinigungsstellung gezeigt. Die Erkennung der Stellung der Reinigungsadapter 21a, 21b erfolgt in diesem Fall über hinter der Bedienkonsole angeordnete Reedsensoren und in den Reinigungsadaptern befindliche Magneten.

Die vom Reinigungssystem kommen Leitung 7" für Reinigungslösung verläuft in diesem Ausführungsbeispiel hinter der Bedienkonsole 20 und von dort durch die Achse 27a, 27b des jeweiligen Reinigungsadapters 21a, 21b hindurch, so dass auf der Vorderseite der Bedienkonsole 20 pro Milchsystem nur ein Anschlussnippel 22a, 22b für den jeweiligen Milchansaugschlauch und ein Blindnippel 26a, 26b benötigt wird.

Neben der Verwendung zur Reinigung eines integrierten Milchsystems eines Kaffeevollautomaten kann das vorstehend beschriebene Reinigungssystem auch in einer Vielzahl anderer Vorrichtungen zur Ausgabe flüssiger Lebensmittel, bei denen aus hygienischen Gründen automatisierte Reinigungsabläufe durchgeführt werden, zum Einsatz kommen.

## Patentansprüche

1. Vorrichtung zur Ausgabe von flüssigen Lebensmitteln, insbesondere Milchprodukten, mit einem integrierten Reinigungssystem (7, 8, 9), welches einen Reinigungsbehälter (7) für eine Spüllösung umfasst, der zur Durchführung eines Reinigungsvorganges mit einer Lebensmittelzuleitung (4a, 4b) der Vorrichtung (1a, 1b, 2) verbindbar ist,
wobei die Lebensmittelzuleitung (4a, 4b) mit einem Anschluss (12a', 12b') versehen ist, der zum Aufstecken einer zu einem Vorratsbehälter (5) mit dem flüssigen Lebensmittel führenden Ansaugleitung (12a, 12b) dient, und wobei die Vorrichtung mindestens eine Pumpe (3a, 3b) umfasst, um das flüssige Lebensmittel über die Lebensmittelzuleitung aus dem Vorratsbehälter (5) zu fördern,
**dadurch gekennzeichnet, dass** ein Verbindungselement (11a, 11b) vorgesehen ist, welches bei abgenommener Ansaugleitung (12a, 12b) auf den Anschluss (12a', 12b') aufsteckbar ist, um die Lebensmittelzuleitung (4a, 4b) mit dem integrierten Reinigungssystem (7, 8, 9) fluidisch zu verbinden und dass die Vorrichtung ausgebildet ist, zur Reinigung über die Pumpe (3a, 3b) Spüllösung aus dem Reinigungsbehälter (7) zu fördern.

2. Vorrichtung nach Anspruch 1, bei der das integrierte Reinigungssystem einen Aufnahmeraum für einen Reinigungsmittelbehälter (9) sowie eine Dosierpumpe (8) zur dosierten Förderung von Reinigungsmittel aus dem Reinigungsmittelbehälter (9) in den Reinigungsbehälter (7), umfasst, in welchem aus Reinigungsmittel und Wasser, vorzugsweise Warmwasser, die Spüllösung gemischt wird.

3. Vorrichtung nach Anspruch 1 oder 2, bei der der Anschluss (12a', 12b') als Stecknippel ausgebildet ist und die Ansaugleitung (12a, 12b) als Ansaugschlauch mit einer auf den Stecknippel (12a', 12b') aufsteckbaren Schlauchkupplung ausgebildet ist.

4. Vorrichtung nach einem der vorangehenden Ansprüche, bei der dem Anschluss (12a', 12b') ein Sensor zugeordnet ist, der einen aufgesteckten Zustand des Verbindungselements (11a, 11b) und/oder des Ansaugschlauchs (12a, 12b) erkennt und ein Steuersignal an eine Steuerungseinrichtung der Vorrichtung sendet, aufgrund dessen der Reinigungsvorgang aktivierbar ist oder selbsttätig aktiviert wird.

5. Vorrichtung nach Anspruch 4, bei der der Sensor als Reedkontakt ausgebildet ist und an dem Verbindungselement (11a, 11b) ein Magnet zur Auslösung des Reedkontaktes angeordnet ist.

6. Vorrichtung nach einem der vorangehenden Ansprüche, bei der das Verbindungselement (11a, 11b) mit der Vorrichtung (2) beweglich verbunden ist und bei abgenommener Ansaugleitung (12a, 12b) von einer inaktiven Stellung in eine Reinigungsstellung bewegbar ist, in der es die Lebensmittelzuleitung (4a, 4b) mit dem integrierten Reinigungssystem (7, 8, 9) verbindet.

7. Vorrichtung nach Anspruch 6, bei der das Verbindungselement (11a, 11b) an einer Konsole (10) der Vorrichtung (2) angeordnet ist, gegenüber der es um eine Achse drehbar und um einen vorgegebenen Hubweg in axialer Richtung verschiebbar gelagert ist, um das Verbindungselement (11a, 11b) von der inaktiven Stellung in die Reinigungsstellung zu bewegen, in der es auf den als Stecknippel ausgeführten Anschluss (12a', 12b') aufsteckbar ist.

8. Vorrichtung nach Anspruch 6 oder 7, bei der das Verbindungselement (11a, 11b) als ein starres Verbindungsteil ausgeführt ist, welches in Form einer Steckbrücke auf den als Stecknippel ausgeführten Anschluss (12a', 12b') und einen weiteren, zu dem Reinigungsbehälter (7) führenden Stecknippel (13a, 13b) aufsteckbar ist.

9. Vorrichtung nach Anspruch 8, bei der die Stecknippel (12a', 12b', 13a, 13b) an einer Konsole (10) der Vorrichtung (2) angebracht sind und das Verbindungsteil (112a, 11b) an einem Bedienhebel angeordnet ist, der gegenüber der Konsole (10) um eine Achse drehbar und um einen vorgegebenen Hubweg in axialer Richtung verschiebbar gelagert ist, um das Verbindungsteil (11a, 11b) von einer inaktiven Stellung in eine Reinigungsstellung zu bewegen, in der es die beiden Stecknippel (12a', 12b', 13a, 13b) verbindet.

10. Vorrichtung nach einem der vorangehenden Ansprüche, bei der der Anschluss (12a', 12b') als Stecknippel ausgebildet ist und das Verbindungselement (11a, 11b) in einer inaktiven Stellung auf mindestens einen Blindnippel (16a, 17a, 16b, 17b; 27) aufsteckbar ist.

## Claims

1. Apparatus for dispensing fluid foodstuffs, especially milk products, having an integrated cleaning system (7, 8, 9) which comprises a cleaning container (7) for a flushing solution, which container, for the purpose of carrying out a cleaning operation, is connectible to a foodstuff supply line (4a, 4b) of the apparatus (1a, 1b, 2),
wherein the foodstuff supply line (4a, 4b) is provided with a connector (12a', 12b') which serves for attachment of a suction line (12a, 12b) leading to a reservoir (5) containing the fluid foodstuff, and wherein the apparatus comprises at least one pump (3a, 3b) for conveying the fluid foodstuff out of the reservoir (5) via the foodstuff supply line,
**characterised in that** a connecting element (11a, 11b) is provided which, with the suction line (12a, 12b) removed, is attachable to the connector (12a', 12b') in order to fluidically connect the foodstuff supply line (4a, 4b) to the integrated cleaning system (7, 8, 9), and the apparatus is designed to convey flushing solution out of the cleaning container (7) via the pump (3a, 3b) for the purpose of cleaning.

2. Apparatus according to claim 1, wherein the integrated cleaning system comprises a receiving space for a cleaning agent container (9) and a metering pump (8) for conveying metered amounts of cleaning agent from the cleaning agent container (9) into the cleaning container (7) in which the flushing solution is mixed from cleaning agent and water, preferably hot water.

3. Apparatus according to claim 1 or 2, wherein the connector (12a', 12b') is in the form of a push-fit nipple and the suction line (12a, 12b) is in the form of a suction hose having a hose coupling attachable to the push-fit nipple (12a', 12b').

4. Apparatus according to any one of the preceding claims, wherein the connector (12a', 12b') is assigned a sensor which detects an attached state of the connecting element (11a, 11b) and/or of the suction hose (12a, 12b) and sends a control signal to a control device of the apparatus, as a result of which the cleaning operation can be activated or is automatically activated.

5. Apparatus according to claim 4, wherein the sensor is in the form of a reed contact and a magnet for triggering the reed contact is arranged on the connecting element (11a, 11b).

6. Apparatus according to any one of the preceding claims, wherein the connecting element (11a, 11b) is movably connected to the apparatus (2) and, with the suction line (12a, 12b) removed, is movable from an inactive position into a cleaning position in which it connects the foodstuff supply line (4a, 4b) to the integrated cleaning system (7, 8, 9).

7. Apparatus according to claim 6, wherein the connecting element (11a, 11b) is arranged on a panel (10) of the apparatus (2), with respect to which it is mounted so as to be rotatable about an axis and displaceable in an axial direction by a specified displacement path in order to move the connecting element (11a, 11b) from the inactive position to the cleaning position in which it is attachable to the connector (12a', 12b') configured as a push-fit nipple.

8. Apparatus according to claim 6 or 7, wherein the connecting element (11a, 11b) is configured as a rigid connecting part which, in the form of a jumper, is attachable to the connector (12a', 12b') configured as a push-fit nipple and to a further push-fit nipple (13a, 13b) leading to the cleaning container (7).

9. Apparatus according to claim 8, wherein the push-fit nipples (12a', 12b', 13a, 13b) are mounted on a panel (10) of the apparatus (2), and the connecting part (11a, 11b) is arranged on an operating lever which is mounted with respect to the panel (10) so as to be rotatable about an axis and displaceable in an axial direction by a specified displacement path in order to move the connecting part (11a, 11b) from an inactive position to a cleaning position in which it connects the two push-fit nipples (12a', 12b', 13a, 13b).

10. Apparatus according to any one of the preceding claims, wherein the connector (12a', 12b') is in the form of a push-fit nipple, and the connecting element (11a, 11b) in an inactive position is attachable to at least one blind nipple (16a, 17a, 16b, 17b; 27).

## Revendications

1. Dispositif destiné à distribuer des produits alimentaires liquides, en particulier des produits laitiers, avec un système de nettoyage intégré (7, 8, 9) qui comprend un récipient de nettoyage (7) pour une solution de rinçage qui, afin d'effectuer un processus de nettoyage, peut être raccordé à une conduite (4a, 4b) d'alimentation en produit alimentaire du dispositif (1a, 1b, 2),
sachant que la conduite (4a, 4b) d'alimentation en produit alimentaire est munie d'un raccord (12a', 12b') qui sert à l'emboîtement d'une conduite d'aspiration (12a, 12b) conduisant à un récipient de stockage (5) contenant le produit alimentaire liquide,
et sachant que le dispositif comprend au moins une pompe (3a, 3b) afin de véhiculer le produit alimentaire liquide hors du récipient de stockage (5) via la conduite d'alimentation en produit alimentaire,
**caractérisé en ce qu'**il est prévu un élément de liaison (11a, 11b) qui, lorsque la conduite d'aspiration (12a, 12b) est retirée, peut être emboîté sur le raccord (12a', 12b') afin d'établir une liaison fluidique entre la conduite (4a, 4b) d'alimentation en produit alimentaire et le système de nettoyage intégré (7, 8, 9),
et **en ce que** le dispositif est conçu pour, aux fins de nettoyage, véhiculer la solution de rinçage hors du récipient de nettoyage (7) au moyen de la pompe (3a, 3b).

2. Dispositif selon la revendication 1, dans lequel le système de nettoyage intégré comprend un espace récepteur pour un récipient (9) de produit de nettoyage ainsi qu'une pompe de dosage (8) pour véhiculer de manière dosée du produit de nettoyage du récipient (9) de produit de nettoyage dans le récipient de nettoyage (7), dans lequel la solution de rinçage est mélangée à partir de produit de nettoyage et d'eau, de préférence d'eau chaude.

3. Dispositif selon la revendication 1 ou 2, dans lequel le raccord (12a', 12b') est réalisé sous forme de manchon d'emboîtement et la conduite d'aspiration (12a, 12b) sous forme de flexible d'aspiration avec un accouplement de flexible pouvant être emboîté sur le manchon d'emboîtement (12a', 12b').

4. Dispositif selon l'une des revendications précédentes, dans lequel un capteur est associé au raccord (12a', 12b'), qui détecte un état emboîté de l'élément de liaison (11a, 11b) et/ou du flexible d'aspiration (12a, 12b) et délivre un signal de commande à un organe de commande du dispositif, en vertu duquel le processus de nettoyage peut être activé ou est automatiquement activé.

5. Dispositif selon la revendication 4, dans lequel le capteur est réalisé sous forme de contact Reed, et un aimant est disposé sur l'élément de liaison (11a, 11b) afin de déclencher le contact Reed.

6. Dispositif selon l'une des revendications précédentes, dans lequel l'élément de liaison (11a, 11b) est relié à déplacement au dispositif (2) et, lorsque la conduite d'aspiration (12a, 12b) est retirée, peut être déplacé d'une position inactive dans une position de nettoyage dans laquelle il établit une liaison entre la conduite (4a, 4b) d'alimentation en produit alimentaire et le système de nettoyage intégré (7, 8, 9).

7. Dispositif selon la revendication 6, dans lequel l'élément de liaison (11a, 11b) est disposé sur une console (10) du dispositif (2), par rapport à laquelle il est monté rotatif autour d'un axe et à translation en direction axiale d'une longueur de course prédéfinie, afin de déplacer l'élément de liaison (11a, 11b) de la position inactive dans la position de nettoyage dans laquelle il peut être emboîté sur le raccord (12a', 12b') réalisé sous forme de manchon d'emboîtement.

8. Dispositif selon la revendication 6 ou 7, dans lequel l'élément de liaison (11a, 11b) est réalisé sous la forme d'une pièce de liaison rigide, qui peut être emboîtée sous la forme d'un pontet sur le raccord (12a', 12b') réalisé sous forme de manchon d'emboîtement et sur un autre manchon d'emboîtement (13a, 13b) conduisant au récipient de nettoyage (7).

9. Dispositif selon la revendication 8, dans lequel les manchons d'emboîtement (12a', 12b', 13a, 13b) sont mis en place sur une console (10) du dispositif (2) et la pièce de liaison (11a, 11b) est disposée sur un levier de commande qui est monté rotatif autour d'un axe et à translation en direction axiale d'une longueur de course prédéfinie par rapport à la console (10), afin de déplacer la pièce de liaison (11a, 11b) d'une position inactive dans une position de nettoyage dans laquelle elle relie les deux manchons d'emboîtement (12a', 12b', 13a, 13b).

10. Dispositif selon l'une des revendications précédentes, dans lequel le raccord (12a', 12b') est réalisé sous forme de manchon d'emboîtement et l'élément de liaison (11a, 11b) peut être emboîté, dans une position inactive, sur au moins un manchon de raccordement fictif (16a, 17a, 16b, 17b ; 27).
